# FASCICULE DE BREVET EUROPEEN

(11) **EP 0 556 113 B1**
(45) Date de publication et mention de la délivrance du brevet: **02.10.1996**
(21) Numéro de dépôt: 93400332.8
(22) Date de dépôt: 10.02.1993
(51) Int. Cl.: E21B 33/13

(54) **Composition utilisable comme laitier de cimentation renfermant du scléroglucane**
Zusammensetzung, verwendbar als scleroglucan enthaltende Zementschlammzusammensetzung
Composition used as a cement slurry containing scleroglucane

(30) Priorité: 12.02.1992 FR 9201548
(43) Date de publication de la demande: 18.08.1993
(73) Titulaire: SOCIETE NATIONALE ELF AQUITAINE, F-92400 Courbevoie (FR)
(72) Inventeur: Donche, Alain, F-64110 Jurancon (FR); Isambourg, Patrick, F-31470 Saint-Lys (FR)
(74) Mandataire: Ohresser, François

(56) Documents cités:
- EP-A- 0 207 536
- EP-A- 0 453 366
- FR-A- 2 570 754

## Description

La présente invention concerne des compositions aqueuses à base de scléroglucane utilisables comme tampon de cimentation ou spacer dans le domaine du traitement des puits d'hydrocarbures.

Lors du forage de puits pétroliers, une suspension visqueuse, appelée boue, est injectée en permanence dans la formation. Les fonctions de cette boue sont multiples. Elle doit refroidir et lubrifier l'outil de forage, remonter à la surface des débris arrachés aux formations et également équilibrer la pression des pores des formations et ainsi éviter l'invasion du puits par les fluides de forage. On utilise des boues à l'eau ou à l'huile dont la densité doit être suffisamment élevée pour remplir ces rôles.

Au moment de la mise en place des tubes qui doivent cuveler le puits, on doit placer entre ces tubes et la paroi du puits du ciment afin de réaliser l'étanchéité de cet espace annulaire et ancrer les tubes. Les tubes sont vissés les uns aux autres et descendus dans le puits. Un mélange ciment-eau appelé laitier de ciment, ayant un volume correspondant à tout ou partie de l'espace annulaire compris entre la parois et le puits est envoyé dans les tubes et refoulé à l'aide de pompes dans l'espace annulaire où on le laisse prendre prise.

Pour assurer une bonne adhésion au ciment, l'espace annulaire doit être débarrassé d'abord des débris de la formation suspendus dans la boue. Dans le cas de l'utilisation d'une boue à l'huile il est nécessaire d'éliminer la pellicule d'huile déposée sur les parois et qui empêcherait l'adhésion du ciment.

Par ailleurs, dans la plupart des cas, la boue et le ciment renferment des constituants incompatibles.

En industrie pétrolière, ces difficultés sont résolues par l'utilisation d'un fluide, appelé tampon de cimentation ou spacer placé entre la boue et le ciment.

Ce tampon doit bien évidemment être compatible avec la boue d'une part et le ciment d'autre part. Sa densité doit être intermédiaire entre celle de la boue et celle du laitier de ciment pour éviter que la boue et le ciment ne viennent en contact, assurer le bon déplacement de la boue et être facilement déplaçable par le laitier de ciment. La densité doit être suffisante pour maintenir la pression des fluides de la formation. La rhéologie doit être adaptée au mode de déplacement choisi à savoir le régime laminaire ou le régime turbulent.

Un tampon de cimentation est usuellement constitué de plusieurs additifs ajoutés à un fluide de base qui peut être l'eau ou une huile, à savoir un viscosifiant qui lui confère ses caractéristiques rhéologiques de base, un alourdissant pour obtenir la densité requise, un réducteur de filtrat pour éviter l'invasion du puits par le fluide de base du tampon et un détergent qui assure le nettoyage des tubes et des parois des formations géologiques traversées par le forage.

Le viscosifiant le plus généralement utilisé est l'hydroxyéthylcellulose (HEC). Le brevet européen EP-B-0049191 décrit la préparation de fluides visqueux pour des opérations de forage pétrolier, à partir de HEC dont la dispersion en milieu aqueux est facilitée par l'addition d'un alcool polyfonctionnel.

Cependant l'hydroxyéthylcellulose présente un sérieux inconvénient. La viscosité de ses solutions chute très brutalement avec l'augmentation de la température. Ainsi pour une utilisation lors de forage de puits profonds et chauds, il est nécessaire d'augmenter considérablement la concentration de l'hydroxyéthylcellulose dans la composition. Ces solutions très concentrées sont difficilement pompables à la température ambiante lors de leur préparation. L'utilisation de grandes quantités de viscosifiant nuit également à l'économie du procédé.

La demande de brevet européen EP-A-207536 décrit le tampon de cimentation comme étant composé d'un biopolymère, notamment du scléroglucane raffiné donc, sans mycélium, d'un agent alourdissant, d'un produit pour le contrôle de filtrat et d'un dispersant en milieu aqueux.

Nous avons trouvé maintenant qu'il était possible de réaliser des tampons de cimentation constitués essentiellement d'une dispersion de scléroglucane non raffiné contenant tout ou partie du mycélium l'ayant produit dans l'eau. Dans le brevet EP 453.366, le scléroglucane sous forme non raffiné était déjà utilisé dans la composition des boues à l'eau et connu pour ses bonnes propriétés de portance des déblais et son effet filmant sur les parois d'un puits. Il s'agit maintenant de l'utilisation du scléroglucane non raffiné dans les tampons de cimentation.

Dans cette application la présence de scléroglucane permet de diminuer la concentration des autres constituants ou même les supprimer. D'autres avantages des tampons de cimentation renfermant du scléroglucane vont paraître au cours de la description.

L'invention a donc pour objet un tampon de cimentation aqueux utilisé au cours des opérations de forage pétrolier caractérisé en ce qu'il renferme de 1 à 20g/l et de préférence de 2 à de scléroglucane, ledit scléroglucane contenant plus de 15% de mycélium, éventuellement sous forme modifiée.

Les scléroglucanes qui entrent dans la composition des tampons de cimentation selon l'invention sont des homopolysaccarides hydrosolubles non-ioniques de poids moléculaires dépassant 50000. Les molécules sont constituées d'une chaîne linéaire principale formée de motifs D-glucose liés par des liaisons bêta-1,3, et dont un sur trois est lié à un motif D-glucose latéral par une liaison bêta-1,6.

Ces polysaccarides sont obtenus par fermentation d'un milieu à base de sucre et de sels minéraux sous l'action d'un micro-organisme de type sclérotium. Une description plus complète des scléroglucanes et de leur préparation peut être trouvée dans la citation US 3301848.

Comme source de scléroglucane pour la préparation des compositions selon l'invention, on peut faire appel au scléroglucane isolé du milieu de fermentation se présentant sous forme de poudre ou bien d'une solution concentrée dans un solvant aqueux hydroalcoolique.

Dans la présente invention, le scléroglucane entrant dans la composition contient tout ou partie du mycelium du champignon producteur. Avantageusement, le cléroglucane utilisé contiendra plus de 15% en poids de mycélium l'ayant produit.

La présence de mycélium assure une plus grande viscosité à quantité égale de matière active. Le mycélium contribue d'autre part largement au contrôle de filtrat. En tapissant les parois de la formation il évite l'invasion du puits par le fluide de base du tampon. L'emploi d'un additif comme réducteur de filtrat est en général superflu.

Le tampon de cimentation est préparé en mélangeant, sous agitation, et à la température ambiante le scléroglucane à l'eau. La concentration en scléroglucane est fonction de la viscosité recherchée.

La dispersion de la poudre de slcéroglucane peut être facilitée et la formation de grumeaux évitée en utilisant un cléroglucane modifié par un polyalcool ou un dialdéhyde.

En cas de modification par un polyalcool on prépare un mélange de polyalcool et de scléroglucane, ce dernier se présentant sous forme de poudre ou bien d'une solution aqueuse concentrée dans un solvant aqueux ou hydroallolique. Lorsque le scléroglucane est utilisé sous forme de poudre et le polyalcool est également solide, comme par exemple dans le cas du pentaerythritol, on doit en outre utiliser une faible quantité d'eau, de manière à ce que le mélange obtenu se présente sous forme d'une pâte homogène.

Le rapport du poids d'alcool sur le poids de scléroglucane doit être supérieur à 1. En général de bons résultats sont obtenus lorsque ce rappport est supérieur à 3.

La pâte est généralement composée de 10 à 30% poids, de préférence 10 à 20% poids de scléroglucane, de 70 à 90% poids de polyalcool et de 0 à 10% d'eau.

Les alcools utilisés pour modifier le scléroglucane sont :
- d'une part, les alcools dont le nombre d'atomes de carbone est compris entre 2 et 6, et dont le nombre de groupes hydroxyles est aussi compris entre 2 et 6, parmi lesquels ont peut citer l'éthylène glycol, le propylène glycol, la glycérine, l'hexylène glycol, le néopentylglycol, le pentaérythritol, le sorbitol, le diéthylène glycol, le dipropylène glycol ;
- d'autre part, les alcools contenant un atome d'azote, dont le nombre d'atomes de carbone est compris entre 2 et 9, et dont le nombre de groupes hydroxyles est compris entre 1 et 3, tels que les éthanolamines, les propanolamines, les isopropanolamines.

Ces alcools peuvent aussi être utilisés sous forme de l'un de leur monoether dont le nombre de carbone de la chaîne alkyle du monoether est compris entre 1 et 4, tels que le méthylglycol, l'éthylglycol, le propylglycol, le butylglycol, le méthoxy-1-propanol-2, le méthoxy-2 propanol-1.

En cas de modification du scléroglucane par un dialdéhyde, telle que décrite dans le brevet français 2633940 on mélange le scléroglucane sous forme de poudre, de solution ou de suspension avec 0,5 à 10% poids de dialdéhyde. Le scléroglucane utilisé sous forme de poudre reste sous cette forme même après le traitement, ce qui facilite grandement son transport et son stockage.

Parmi les dialdéhydes on utilise de préférence le glyoxal.

La dispersion de ces poudres est rapide et sans formation de grumeaux. Elle s'effectue quelle que soit la teneur en sels de l'eau utilisée. Avec le matériel de dispersion couramment disponible sur les sites de forage, le développement de viscosité est pratiquement instantané dans les fluides basiques. Il reste le plus souvent inférieur ou égal à 30 minutes dans les autres.

L'eau entrant dans la composition du tampon de cimentation peut être de l'eau douce, de l'eau de mer, ou une saumure. La saumure peut renfermer des ions alcalins ou alcalino-terreux, comme le sodium, le potassium ou le calcium. La viscosité de la composition n'est pas affectée par ces ions, même à concentration élevée. Ainsi la qualité de l'eau utilisée n'affecte pas la viscosité de la composition. Elle est également insensible à la présence d'ions dans la formation.

Il peut être nécessaire d'ajouter à la composition un alourdissant comme le sulfate de baryum. Pour maintenir en suspension l'alourdissant, il est nécessaire de viscosifier les tampons de cimentation à base d'HEC à la bentonite. Les compositions aqueuses de scléroglucane ont le comportement d'un fluide à seuil. La viscosité de la composition est maintenue jusqu'aux très faibles taux de cisaillement. Ainsi le sulfate de baryum reste en suspension dans la composition même à l'arrêt. Il est donc possible de préparer ces compositions à l'avance et de les stocker jusqu'à l'utilisation, sans sédimentation.

Si les compositions sont utilisées lors d'un forage à boue à l'huile, on ajoutera avantageusement à la composition un tensioactif. Ce tensioactif stabilise la rhéologie du mélange tampon de cimentation-boue à l'huile formé à l'interface et surtout assure un bon nettoyage des parois du puits.

Le scléroglucane est compatible avec les tensioactifs usuels. La viscosité de la composition n'est pas affectée par la présence du tensioactif.

La composition selon l'invention a des caractéristiques rhéologiques très bien adaptées à l'utilisation comme tampon de cimentation. Elle associe un comportement pseudoplastique très marqué et un seuil d'écoulement remarquablement élevé. En assurant une basse rhéologie aux forts cisaillements, elle facilite le pompage et le placement du fluide dans le puits. Cette faible rhéologie n'entraîne pas la sédimentation de l'alourdissant grâce au seuil d'écoulement élevé du produit. Les caractéristiques rhéologiques de la composition garantissent également un excellent déplacement des boues de forage et une parfaite isolation du bouchon de ciment.

La viscosité des compositions selon l'invention est très peu affectée par la température; elle est pratiquement constante jusqu'à 130°C. Ainsi les caractéristiques rhéologiques mesurées en surface sont représentatives de celles obtenues en fond de puits. Comparée à l'HEC dont la chute de viscosité à température élevée doit être compensée par une viscosité très élevée en surface, l'utilisation des compositions selon l'invention réduit les pertes de charge pour une même rhéologie au fond. Elle évite également la surconsommation du viscosifiant, nécessaire dans le cas d'HEC pour compenser la dégradation due à la température.

Les compositions selon l'invention sont parfaitement compatibles avec les deux fluides avec lesquels elles entrent en contact lors de leur utilisation, la boue de forage et le laitier de ciment. L'utilisation des compositions selon l'invention comme tampon de cimentation permet une bonne cimentation des puits et une bonne adhésion du ciment aux parois.

Grâce à leur comportement rhéologique particulier, leur bonne stabilité thermique et leur compatibilité avec divers contaminants, les compositions selon l'invention conviennent également à d'autres types de fluides utilisés lors des forages pétroliers, comme les fluides de test, les fluides de fracturation, les fluides de complétion ou les fluides de post-cimentation.

L'invention est illustrée par les exemples suivants donnés à titre non limitatif.

Le scléroglucane utilisé est fabriqué par SANOFI BIO INDUSTRIES (France) à partir d'une souche Sclérotuum Rolsfii. Deux qualités de scléroglucane sont disponibles: une qualité raffinée contenant moins de 10% de mycélium, commercialisée sous le nom d'ACTIGUM CSII et une qualité non raffinée comprenant de l'ordre de 25% de résidus de mycélium, commercialisée sous le nom d'ACTIGUM CS6. Tous les essais qui suivent ont été effectués avec de l'ACTIGUM CS6, soit non traité, soit traité au polyalcool, soit traité au glyoxal. L'ACTIGUM CS6 traité au glyoxal est commercialisé par SANOFI BIO INDUSTRIES sous le nom d'ACTIGUM CS6SR.

L'hydroxyéthylcellulose utilisée est commercialisée par HERCULES, sous le nom de NATROSOL 250 HHR-P.

### EXEMPLE 1

### Dispersion du scléroglucane

On a comparé la dispersion de l'ACTIGUM CS6SR et de l'ACTIGUM CS6. Dans une eau douce à 20°C dont le pH a été préalablement porté à 9,5 par addition de soude, on ajoute de l'ACTIGUM CS6SR sous très faible agitation (moteur IKA DW 20 DZM, équipé d'une pale T3/B, fonctionnant à 600t/mn). On constate une dispersion immédiate de la poudre sans aucune formation de grumeaux. Le développement complet de la viscosité du polymère est rapide La même opération est reproduite dans une eau dont le pH n'a pas été modifié. La dispersion de l'ACTIGUM CS6SR est également excellente. On constate simplement un développement plus lent de la viscosité.

Dans une eau douce à 20°C dont le pH a été préalablement porté à 9,5 par addition de soude, on ajoute de l'ACTIGUM CS6 dans les mêmes conditions d'agitation que précédemment. On constate une abondante formation de grumeaux. La mise en oeuvre d'un mélangeur Hamilton Beach est nécessaire pour obtenir une parfaite dispersion de l'ACTIGUM CS6.

Le tableau I permet de comparer les développements de viscosité obtenus en fonction du temps au cours des trois essais précédents. La concentration est de 5g/l de scléroglucane. Les mesures rhéhologiques sont effectuées au moyen d'un viscosimètre Brookfield LVT muni d'un adaptateur UL fonctionnant à 30t/mn. On constate que l'ACTIGUM CS6SR est bien adaptée à la préparation de tampons de cimentation qui sont le plus souvent basiques.

On a comparé également la dispersion de l'ACTIGUM CS6 modifié au polyalcool et de l'ACTIGUM CS6. L'ACTIGUM CS6 modifié au polyalcool se présente sous la forme d'une pâte homogène. Le produit utilisé dans cet exemple est constitué de 15% d'ACTIGUM CS6, 10% d'eau et de 75% de propylèneglycol.
Dans une eau douce à 20°C, on ajoute de l'ACTIGUM CS6 modifié au polyalcool sous agitation (moteur IKA DW 20 DZM équipé d'une pâle T3/B). La suspension est agitée à la vitesse de 600 t/mn durant 15 mn puis 2000t/mn durant les cinq suivantes. On reproduit la même opération avec l'ACTIGUM CS6. On constate une abondante formation de grumeaux.

Le tableau II permet de comparer les développements de viscosité obtenus en fonction du temps au cours des deux essais précédents. La concentration est de 5g/l de scléroglucane. Les mesures rhéologiques sont effectuées au moyen d'un viscosimètre Brookfield LVT muni d'un adaptateur UL fonctionnant à 30 t/mn. On constate que la modification de l'ACTIGUM CS6 par le propylèneglycol améliore considérablement la dispersion du polymère.

**TABLEAU I**

| | | | | | | |
|---|---|---|---|---|---|---|
| Temps mn | 5 | 10 | 15 | 20 | 30 | 60 |
| ACTIGUM CS6SR pH=9,5 | 10 | 120 | 150 | 170 | 185 | 235 |
| ACTIGUM CS6SR pH=7 | 10 | 45 | 125 | 155 | 180 | 235 |
| ACTIGUM CS6 pH=9,5 | 15 | 50 | 115 | 150 | 175 | 230 |

Développement de viscosité (mPa.s) avec le temps de deux dispersions d'ACTIGUM CS6SR et d'une dispersion d'ACTIGUM CS6 (concentration : 5g/l).

**TABLEAU II**

| | | | | | | | |
|---|---|---|---|---|---|---|---|
| Temps mn | 1 | 2 | 3 | 5 | 10 | 15 | 20 |
| ACTIGUM CS6 modifié | 100 | 150 | 210 | 290 | 440 | 550 | 1300 |
| ACTIGUM CS6 | 50 | 50 | 50 | 70 | 110 | 150 | 200 |

Développement de viscosité (mPa.S) avec le temps d'une dispersion d'ACTIGUM CS6 modifié au propylèneglycol et d'une dispersion d'ACTIGUM CS6 (concentration : 4g/l).

### EXEMPLE 2

### Compatibilité du scléroglucane avec les électrolytes

On a comparé les viscosités développées par l'ACTIGUM CS6 SR dans des eaux différemment chargées en électrolytes. Les suspensions ont été préparées selon la méthode décrite dans l'exemple 1 et comparées dans les mêmes conditions. Les mesures rhéologiques sont effectuées à 20°C au moyen d'un rhéomètre FANN 35.

Le tableau III permet de comparer les lectures FANN des différentes suspensions pour une même concentration de l'agent viscosifiant (6g/l). On constate une excellente tenue rhéologique. Par rapport à l'eau douce, les différents électrolytes utilisés sont pratiquement sans influence sur la viscosité développée par le scléroglucane.

**TABLEAU III**

| Mesures FANN | Eau douce | Eau de mer | NaCl 60g/l | NaCl 120g/l | KCl 60g/l | KCl 120g/l | CaCl₂ 5g/l |
|---|---|---|---|---|---|---|---|
| 600t/mn | 26 | 27 | 28 | 28 | 24 | 24 | 25 |
| 300t/mn | 20 | 21 | 21 | 21 | 20 | 19 | 19 |
| 200t/mn | 18 | 19 | 18 | 18 | 17 | 17 | 17 |
| 100t/mn | 15 | 16 | 15 | 15 | 15 | 14 | 14 |
| 60t/mn | 14 | 14 | 14 | 14 | 14 | 13 | 13 |
| 30t/mn | 13 | 13 | 12 | 12 | 12 | 12 | 11 |

Compatibilité de l'ACTIGUM CS6SR avec les électrolytes (concentration : 6 g/l)

### Exemple 3

### Pouvoir de suspension du scléroglucane

On a préparé selon la méthode décrite dans l'exemple 1 deux suspensions d'ACTIGUM CS6SR, l'une à la concentration de 2g/l, l'autre de 4g/l. Les deux suspensions sont préparées dans de l'eau douce dont le pH a été préalablement porté à 9,5 par ajout de soude. Les densités de ces deux suspensions sont ensuite ajustées à 1,7 par addition de sulfate de baryum. Le tableau IV décrit les caractéristiques rhéologiques à 20°C des deux fluides obtenus, mesurées au moyen d'un rhéomètre FANN 35. Après 24 heures au repos et en l'absence de toute agitation, on ne constate aucune sédimentation de la sulfate de baryum. Le scléroglucane procure donc aux spaceurs de cimentation un excellent pouvoir de suspension. Comme on a constaté également l'absence de gel, un arrêt de circulation prolongé pendant la cimentation ne s'opposera pas à la remise en circulation du spaceur.

**TABLEAU IV**

| Mesures FANN | Concentration en scléroglucane | |
|---|---|---|
| | 2g/l | 4g/l |
| 600 t/mn | 35 | 50 |
| 300 t/mn | 22 | 33 |
| 200 t/mn | 16 | 27 |
| 100 t/mn | 10 | 20 |
| 60 t/mn | 8 | 18 |
| 30 t/mn | 6 | 15 |
| 6 t/mn | 4 | 11 |
| 3 t/mn | 3 | 10 |

Caractéristiques rhéologiques à 20°C de deux suspensions d'ACTIGUM CS6SR et de sulfate de baryum à la densité de 1,7. On a comparé également les pouvoirs de suspension de l'ACTIGUM CS6SR et de l'hydroxyéthylcellulose. L'hydroxyéthylcellulose est couramment utilisé pour le contrôle rhéologique des tampons de cimentation. On a préparé selon la méthode décrite dans l'exemple 1 une suspension d'ACTIGUM CS6SR à la concentration de 5g/l dans une eau dont le pH a été préalablement porté à 9,5. On a préparé dans la même eau une suspension d'hydroxyéthylcellulose à la concentration de 5g/l en utilisant la méthode décrite dans l'exemple 1 pour la mise en suspension de l'ACTIGUM CS6 (mélangeur Hamilton Beach). Par addition de sulfate de baryum, on prépare à partir de chaque suspension, un fluide de densité 1,3 et un autre de densité 1,6. Les différents fluides sont ensuite maintenus à 90°C durant 16 heures en l'absence de toute agitation.

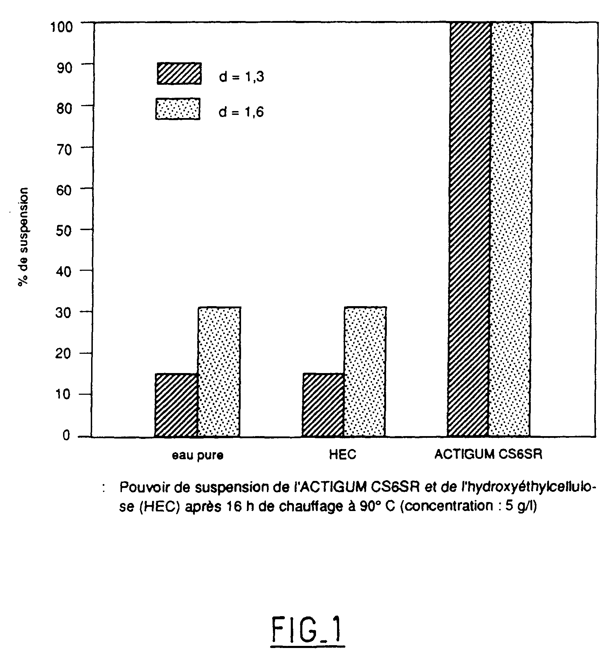

La figure 1 permet de comparer le taux de suspension enregistré dans les quatre fluides. Il apparaît que le sulfate de baryum a totalement sédimenté dans les deux suspensions d'hydroxyéthylcellulose. Par contre des suspensions de scléroglucane n'ont pas sédimenté. Il est ainsi démontré que le scléroglucane conserve son pouvoir de suspension en température.

### Exemple 4

### Compatibilité du scléroglucane et des tensio-actifs

On a préparé selon la méthode décrite dans l'exemple 1 une suspension d'ACTIGUM CS6SR à la concentration de 3g/l dans une eau douce dont le pH a été préalablement porté à 9,5 par ajout de soude. La densité de cette suspension est ajustée à 1,70 par addition de baryte. On incorpore ensuite à ce fluide 3% en volume du détergent D607 de la société Dowell-Shlumberger. Le détergent D 607 est couramment utilisé dans les tampons de cimentation. Il assure le nettoyage de l'espace à cimenter, notamment lors des forages effectués avec des boues à l'huile. Après un stockage de deux heures en l'absence de toute agitation, on n'observe aucune sédimentation de la baryte. Ce résultat démontre la bonne compatibilité du scléroglucane et du détergent D 607 qui peut être incorporé sans risque dans un tampon au scléroglucane.

### EXEMPLE 5

### Comportement rhéologique du scléroglucane

On compare le comportement rhéologique de deux suspensions d'ACTIGUM CS6SR et d'une suspension d'hydroxyéthylcellulose. Les deux suspensions de scléroglucane sont préparées selon la méthode décrite dans l'exemple 1, l'une à la concentration de 4g/l, l'autre à la concentration de 6g/l et dans une eau douce dont le pH a été préalablement porté à 9,5. On a préparé dans la même eau une suspension d'hydroxyéthylcellulose à la concentration de 5g/l en utilisant la méthode décrite dans l'exemple 1 pour la mise en suspension de l'ACTIGUM CS6 (mélangeur Hamilton Beach).
Les mesures rhéologiques sont effectuées à 20°C au moyen d'un rhéomètre Carri-Med (viscosimètre à contrainte imposée).

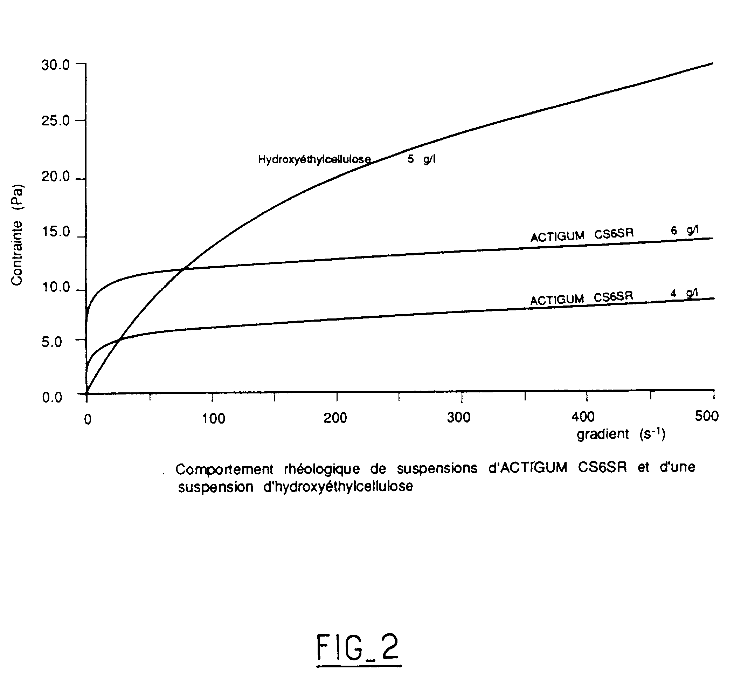

La figure 2 permet de comparer les comportements rhéologiques des trois suspensions. On constate que les suspensions de scléroglucane possèdent, au contraire de l'hydroxyéthylcellulose, un comportement pseudoplastique très marqué, caractérisé par une contrainte réduite aux forts taux de cisaillement. Elles possèdent également un seuil d'écoulement remarquablement élevé qui est totalement absent dans le cas de l'hydroxyéthylcellulose. Ces deux propriétés sont particulièrement recherchées en forage-complétion.

### EXEMPLE 6

### Tenue en température du scléroglucane

On a comparé les viscosités développées par l'ACTIGUM CS6SR entre 25 et 140°C à celles développées par l'hydroxyéthylcellulose dans les mêmes conditions. La suspension d'ACTIGUM CS6SR est préparée selon la méthode décrite dans l'exemple 1 avec une eau douce dont le pH est ajusté à 9,5 par ajout de soude. On a préparé dans la même eau la suspension d'hydroxyéthylcellulose selon la méthode décrite dans l'exemple 1 pour la mise en suspension de l'ACTIGUM CS6 (mélangeur Hamilton Beach). Les caractéristiques respectives d'ACTIGUM CS6SR et d'hydroxyéthylcellulose sont ajustées de telle manière que les viscosités des deux suspensions soient identiques à 25°C et de l'ordre de celles appliquées dans les tampons de cimentation (8g/l pour la suspension d'ACTIGUM CS6SR et 4g/l pour la suspension d'hydroxyéthylcellulose). Les deux suspensions sont comparées dans les mêmes conditions. Les mesures rhéologiques sont effectuées au moyen d'un rhéomètre FANN 70 au taux de cisaillement de 340 s⁻¹.

Le tableau V permet de comparer les lectures FANN des deux suspensions entre 25 et 140°C. On constate une très forte chute de rhéologie avec la température pour la suspension d'hydroxyéthylcellulose alors que la suspension de scléroglucane manifeste une excellente stabilité de sa rhéologie jusqu'à 130°C.
Cette propriété est particul ièrement recherchée en forage-complétion car elle assure la maîtrise de la rhéologie du tampon de cimentation durant la circulation et en fond de puits.

**TABLEAU V**

| Suspension | ACTIGUM CS6SR | Hydroxyéthylcellulose |
|---|---|---|
| Température °C | Viscosité mPa.s | |
| 25 | 50 | 50 |
| 30 | 50 | 45 |
| 40 | 49 | 30 |
| 50 | 48 | 24 |
| 60 | 47 | 12 |
| 70 | 46,5 | 6 |
| 80 | 45 | 3 |
| 90 | 45 | 3 |
| 100 | 45 | 3 |
| 110 | 45 | 3 |
| 120 | 46,5 | 3 |
| 130 | 43,5 | 3 |
| 140 | 4,5 | 3 |

Tenue en température d'une suspension d'ACTIGUM CS6SR (8g/l) et d'une suspension d'hydroxyéthylcellulose (4g/l).

### EXEMPLE 7

### Compatibilité du scléroglucane avec les laitiers de ciment

On a comparé les viscosités développées par différents mélanges d'une suspension d'ACTIGUM CS6SR et d'un laitier de ciment. La suspension d'ACTIGUM CS6SR est préparée dans une eau douce dont le pH a été ajusté à 9,5 par ajout de soude selon la méthode décrite dans l'exemple 1, avec une concentration de 3g/l. La suspension d'ACTIGUM CS6SR est mélangée en proportions variables à un laitier de ciment de densité d=1,9.
Les différents fluides sont comparés dans les mêmes conditions. Les mesures rhéologiques sont effectuées à 20°C au moyen d'un rhéomètre FANN 35.

Le tableau VI permet de comparer les lectures FANN des différents mélanges laitier de ciment-suspension de scléroglucane. On constate une excellente compatibilité des composants des deux suspensions. Toutes les rhéologies des mélanges sont intermédiaires entre celle de la suspensions d'ACTIGUM CS6SR et celle du laitier de ciment.

**TABLEAU VI**

| Mesures FANN | A | A/B 75/25 | A/B 50/50 | A/B 25/75 | B |
|---|---|---|---|---|---|
| 600 t/mn | 14 | 24 | 21 | 41 | 183 |
| 300 t/mn | 9 | 12 | 11 | 23 | 103 |
| 200 t/mn | 7 | 9 | 8 | 15 | 80 |
| 100 t/mn | 5 | 6 | 6 | 13 | 55 |
| 60 t/mn | 4 | 4 | 6 | 10 | 44 |
| 30 t/mn | 4 | 3 | 5 | 9 | 39 |
| 6 t/mn | 3 | 3 | 4 | 6 | 19 |
| 3 t/mn | 3 | 3 | 4 | 6 | 13 |

Compatibilité d'une suspension d'ACTIGUM CS6SR à la concentration de 3g/l (A) et d'un laitier de ciment de densité d=1,9 (B)

## Revendications

1. Tampon de cimentation aqueux utilisé au cours des opérations de forage pétrolier caractérisé en ce qu'il renferme 2 à 6 g/l de scléroglucane contenant plus de 15% poids de mycélium, ledit scléroglucane étant éventuellement utilisé sous forme modifiée.

2. Tampon selon la revendication 1 caractérisé en ce que le scléroglucane est mis en solution tel quel.

3. Tampon selon la revendication 1 caractérisé en ce que le scléroglucane est sous une forme modifiée obtenue par dispersion du scléroglucane dans l'eau en présence d'au moins un polyalcool comprenant de 2 à 9 atomes de carbone et de 1 à 6 groupes hydroxyles, ou son monoéther.

4. Tampon selon les revendications 1 et 3 caractérisé en ce que dans le scléroglucane modifié le rapport du poids de polyalcool sur le poids de scléroglucane est supérieur à 3.

5. Tampon selon la revendication 1 caractérisé en ce que le scléroglucane modifié renferme 0,5 à 10% poids de dialdéhyde.

6. Tampon selon l'une des revendications 1 à 5 caractérisé en ce qu'il renferme un alourdissant comme le sulfate de baryum.

7. Tampon selon l'une des revendications 1 à 6 caractérisé en ce qu'il renferme un tensioactif.

## Patentansprüche

1. Wäßriger Zementierungsspacer zur Verwendung bei Erdölbohrungen, dadurch gekennzeichnet, daß er 2-6 g/l Scleroglucan mit über 15 Gew.-% Myzel enthält, wobei das Scleroglucan gegebenenfalls auch in modifizierter Form verwendet wird.

2. Spacer nach Anspruch 1, dadurch gekennzeichnet, daß das Scleroglucan als solches gelöst wird.

3. Spacer nach Anspruch 1, dadurch gekennzeichnet, daß das Scleroglucan in modifizierter Form, erhalten durch Dispergierung des Scleroglucans in Wasser in Anwesenheit wenigstens eines 2-9 Kohlenstoffatome und 1-6 Hydroxylgruppen umfassenden mehrwertigen Alkohols, oder als Monoether vorliegt.

4. Spacer nach einem der Ansprüche 1 bis 3, dadurch gekennzeichnet, daß das Verhältnis des Gewichts des mehrwertigen Alkohols zum Gewicht des Scleroglucans im modifizierten Scleroglucan über 3 liegt.

5. Spacer nach Anspruch 1, dadurch gekennzeichnet, daß das modifizierte Scleroglucan 0,5-10 Gew.-% Dialdehyd enthält.

6. Spacer nach einem der Ansprüche 1 bis 5, dadurch gekennzeichnet, daß er ein Beschwerungsmittel wie Bariumsulfat enthält.

7. Spacer nach einem der Ansprüche 1 bis 6, dadurch gekennzeichnet, daß er ein Tensid enthält.

## Claims

1. Aqueous cementation plug used in the course of oil drilling operations, characterised in that it comprises from 2 to 6 g/l of scleroglucan containing more than 15% by weight of mycelium, the scleroglucan optionally being used in modified form.

2. Plug according to Claim 1, characterised in that the scleroglucan is dissolved as such.

3. Plug according to Claim 1, characterised in that the scleroglucan is in a modified form obtained by dispersing scleroglucan in water in the presence of at least one polyalcohol containing from 2 to 9 carbon atoms and from 1 to 6 hydroxy groups, or its monoether.

4. Plug according to Claims 1 and 3, characterised in that, in the modified scleroglucan, the ratio of the weight of polyalcohol to the weight of scleroglucan is higher than 3.

5. Plug according to Claim 1, characterised in that the modified scleroglucan contains from 0.5 to 10% by weight of dialdehyde.

6. Plug according to any one of Claims 1 to 5, characterised in that it contains a ballasting agent, such as barium sulphate.

7. Plug according to any one of Claims 1 to 6, characterised in that it contains a surfactant.
